# EUROPEAN PATENT SPECIFICATION

(11) **EP 3 769 511 B1**
(45) Date of publication and mention of the grant of the patent: **06.12.2023**
(21) Application number: 19772467.7
(22) Date of filing: 19.03.2019
(51) Int. Cl.: F41H 11/02, F41H 13/00, G06V 20/52

(54) **SYSTEM AND METHOD FOR CARRYING OUT A FLEXIBLE HANDOVER BETWEEN MULTIPLE ENERGY DIRECTING ELEMENTS**
SYSTEM UND VERFAHREN ZUR DURCHFÜHRUNG EINER FLEXIBLEN ÜBERGABE ZWISCHEN MEHREREN ENERGIEWAFFE-EINHEITEN
SYSTÈME ET PROCÉDÉ POUR EFFECTUER UN TRANSFERT FLEXIBLE ENTRE DE MULTIPLES ÉLÉMENTS Ä ÉNERGIE DIRIGÉE

(30) Priority: 19.03.2018 IL 25823318
(43) Date of publication of application: 27.01.2021
(73) Proprietor: Elbit Systems Electro-Optics Elop Ltd., 7611101 Rehovot (IL)
(72) Inventor: GROSSMAN, Kuti, 7611101 Rehovot (IL)
(74) Representative: Pearl Cohen Zedek Latzer Baratz UK LLP
(86) International application number: PCT/IL2019/050302
(87) International publication number: WO 2019/180707

(56) References cited:
- EP-A1- 2 442 131
- EP-A1- 2 527 865
- EP-A1- 3 081 895
- EP-A1- 3 081 895
- DE-A1-102015 011 058
- US-A1- 2010 126 335
- US-A1- 2010 157 064

## Description

### FIELD OF THE INVENTION

The present invention relates generally to the field of managing a plurality of energy directing elements, and more particularly to applying a flexible handover scheme to the energy directing elements.

### BACKGROUND OF THE INVENTION

Prior to the background of the invention being set forth, it may be helpful to provide definitions of certain terms that will be used hereinafter.

The term "energy directing elements" as used herein is broadly defined as any passive or active component, element or device that either reflects, conveys, transmits, receives, transfers, focuses, senses or produces energy in a specified direction. The angle of the energy directing elements may or may not be changed dynamically by directing means that may be either mechanical, electrical, or electro-optical. By way of a non-limiting example, directional elements may include: optical and other trackers, scanning mirrors, laser pointers, beam directors, radars, ultra sound transducers, antennas of various kinds and the like. Broadly speaking, the energy directing element directs either incoming or outcoming energy of any type and form, into a smaller volume and at a specified spatial direction.

The term "field of regard" or "FOR" as used herein is defined as the entire operational area or volume covered by a specified energy directing elements as it being directed in all possible angles by the directing means. In a case of a tracker, for example, the field of regard will be the entire area or volume effectively covered by the tracker.

The term "field of view" or "FOV" as used herein is defined as the effective area or volume affected by the energy directing element at a specified direction. In a case of a laser beam director for example, the field of view will be the width of the laser beam.

In systems that include a plurality of energy directing elements such as a plurality of beam directors where there is an overlap between the field of regard (FOR) of at least two of the energy directing elements there is a challenge of managing the handover of the energy directing elements. Specifically, the technical problem is to determine the manner and timing of handover, within the overlap area, between the energy directing elements which move in angular movements. The challenge is to maintain the continuity of the operation of the energy directing elements (e.g. tracking of the object), to reduce the number of unnecessary handovers, and to deal with multiple objects (e.g. targets).

In a non-limiting example, such a handover is required in Direct Infra-Red Counter Measure (DIRCM) payloads which may include two or more laser beam directors (being a private case of energy directing elements) and whenever a target is within the overlap area of the fields of regards of the respective beam directors, there is a need to decide how and at which point should the handover be carried out.

European Patent Application Publication No. EP3081895 describes a trivial solution to this problem by suggesting a strict handover criterion according to which a borderline within the overlap area (e.g. in the middle of the overlap area) splits the operation between two beam directors. This solution is far from optimal for timing of the handover, and neither for dealing with multiple objects or reducing the number of handovers. For example, an object that moves back and forth and along the borderline with many crossovers, will lead to an undesirable increased number of handovers, because of the strict criterion.

### BRIEF SUMMARY OF THE INVENTION

In order to improve the effectiveness of the operation of the energy directing elements, the present invention provide a system according to claim 1 and method according to claim 7 for determining a handover between at least two energy directing elements. The system comprises two or more energy directing elements that have a common overlap area defining an area that is coverable by a direction of said two or more energy directing elements wherein one of the energy directing elements is an active energy directing element that aims on and tracks a target; a handover decision module configured to: obtain a plurality of handover parameters including the position, speed and pattern of movement of the target monitored over time, and therefrom learning and predicting the target's movement and trajectory; determine, based on the obtained handover parameters and a plurality of handover rules including a rule for reducing a number of unnecessary handovers, a handover point within the overlap area in which to handover between the active energy directing element to one other of said at least two energy directing elements; and a controller configured to carry out the handover between the energy directing elements based on the determined handover point.

Other aspects and/or advantages of the present invention are set forth in the detailed description which follows.

### BRIEF DESCRIPTION OF THE DRAWINGS

For a better understanding of the invention and in order to show how it may be implemented, references are made, purely by way of example, to the accompanying drawings in which like numerals designate corresponding elements or sections. In the accompanying drawings:
**Fig. 1** shows a schematic diagram showing the environment of some embodiments of the present invention;
**Fig. 2** is a block diagram showing a possible implementation of a system according to some embodiments of the present invention;
**Fig. 3** shows a diagram illustrating an aspect of the system according to some embodiments of the present invention; and
**Fig. 4** is a flowchart diagram illustrating the steps of a method in accordance with some embodiments of the present invention.

### DETAILED DESCRIPTION OF THE INVENTION

With specific reference now to the drawings in detail, it is stressed that the particulars shown are for the purpose of example and solely for discussing the preferred embodiments of the present invention, and are presented in the cause of providing what is believed to be the most useful and readily understood description of the principles and conceptual aspects of the invention. In this regard, no attempt is made to show structural details of the invention in more detail than is necessary for a fundamental understanding of the invention. The description taken with the drawings makes apparent to those skilled in the art how the several forms of the invention may be embodied in practice.

Before explaining the embodiments of the invention in detail, it is to be understood that the invention is not limited in its application to the details of construction and the arrangement of the components set forth in the following descriptions or illustrated in the drawings. The invention is applicable to other embodiments and may be practiced or carried out in various ways. Also, it is to be understood that the phraseology and terminology employed herein is for the purpose of description and should not be regarded as limiting.

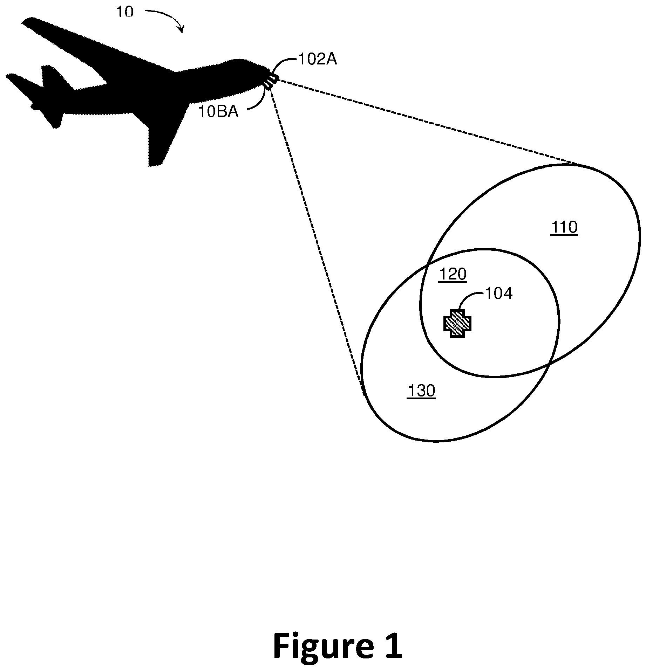

**Fig. 1** shows a schematic diagram showing the environment of some embodiments of the present invention. An aircraft **10** carries two or more energy directing elements such as beam directors **102A** and **102B** (possibly of a DIRCM system) each having a field of regard **110** and **130** respectively, of their respective beams, with an overlap area **120** which is common to beam directors **102A** and **102B.** A target **104** may be tracked while within overlap area **120** by one of beam directors **102A** and **102B** and there is a need to determine in a most effective manner, what would be the handover point to carry the handover, provided that at some point the tracking can only be carried out by a different beam director than the one currently handling the target, or alternatively, in a case that another target appears in a portion of area **110** that is not covered by the overlap are **120** and so beam director **102A** needs to be allocated to it as beam director **102B** cannot handle it.

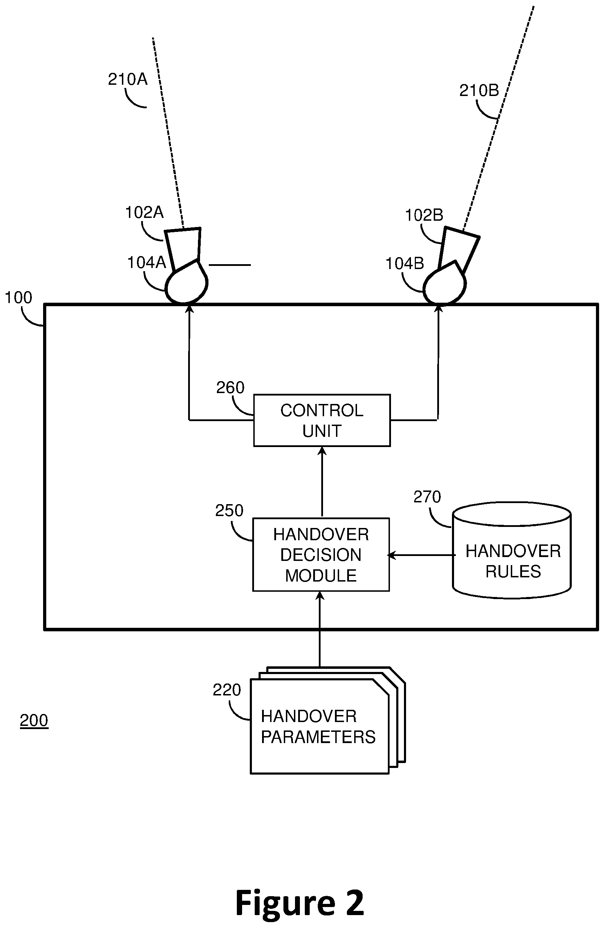

**Fig. 2** is a block diagram showing a possible implementation of a system for determining a handover point between at least two energy directing elements according to some embodiments of the present invention. System **100** may include two or more energy directing elements **102A** and **102B** that have a common overlap area of their respective operational area of their respective beams **210A** and **210B** being an area that is coverable by a beam of two or more energy directing elements, wherein one of the beam directors is an active energy directing element that aims on and tracks a target.

System **100** may further include a handover decision module **250** configured to obtain a plurality of handover parameters **220** relating to at least one of: presence and position of targets other than the tracked target; trajectory and predicted path of the aimed target; timing constraints, and operational constraints any one of two or more energy directing elements **102A** and **102B.** Handover decision module **250** may be further configured to determine, based on the obtained handover parameters and a plurality of handover rules **270,** a handover point within the overlap area in which handover between the active energy directing element to one other of the at least two energy directing elements **102A** and **102B.** System **100** may further include a controller configured to carry out the handover between the energy directing elements **102A** and **102B** controlled by directing means **104A** and **104B** based on the determined handover point. As explained above, the directing means can be either mechanical, electrical, electro-optical or any other technology that may be used to control the effective direction of the energy coming from or directed into the energy directing element such as the beam director.

According to some embodiments of the present invention, handover decision module may be further configured to assign, at the handover time, one of a plurality of operation modes to the remaining or joining energy directing elements.

### Handover Rules

According to some embodiments of the present invention, handover rules **270** may be a set of rules that may be updated from time to time and can be further tailored for the specific technology or application, since optimizing the handover of the energy directing elements can differ based on the kind of technology and application. Such rules may include for example:
- **Reducing power consumption of the energy directing elements.** Sometimes it is better to keep an active energy directing element operational rather than handover to another energy directing element, because of high power consumption required to initiate another energy directing element.
- **Extending duration of the operation.** Some energy directing element have limited duration and knowing the limitations of each of the energy directing element in term of remaining operation time can determine an early or late handover in order to increase either total duration of the system or of each of the energy directing element, for example, in case it is important to extend the duration of each of the energy directing elements as much as possible when each covers an area not covered by the others.
- **Reducing the number of handovers.** Sometimes the handover itself is associated with a cost (power, reduced performance during handover) and it is desirable to reduce the number of unnecessary handovers. These can happen, for example in a case that a handover criterion is only based on location of a target within the overlap area. A "jittering" target can lead to many handovers if the criterion for handover is, for example, crossover of a predefined boundary.
- **Prioritizing targets.** Whenever that are more targets than the energy directing elements it is required to set an order of priority for handling them. As some of the targets may be located in the overlap area and some may not, it is important to schedule the handovers that are possible (only within the overlap area) in order to release the energy directing elements that are capable of handling targets in their exclusive coverage area. This will lead for early handover.
- **Prioritizing risks.** Sometimes, when the targets pose a threat to the platform carrying the energy directing elements, top priority needs to be given to addressing the target that threatens the platform the most. This rule may override all other rules and is applied based on the estimated time of approach of the target towards the platform.

### Handover Parameters

According to some embodiments of the present invention, in order to implement some or all of the aforementioned handover rules, it is required to calculate or otherwise obtain, handover parameters **220** that are parameters derived either from the system, the targets or external sources and are used in conjunction with the handover rules. These handover parameters may include, for example:
- **Historic trajectory of the target(s).** Targets position, including speed and pattern of movement can be monitored over time in order to learn and predict their movement and assess their projected or predicted trajectory. If for example the pattern is of a "jittering" target, it is desirable to delay handover as much as possible in order to reduce the number of handovers as it is not clear that the target will leave the overlap area soon enough to justify a handover. If on the other hand the trajectory is toward an exclusive field of regard of one of the energy directing elements, an early handover toward that energy directing element may be considered.
- **Maximal operation duration of the energy directing element.** This parameter relates primarily to active sources of energy such as beam directors (of laser) and other "power hungry" devices. The remaining operation time of each of the energy directing elements can be factored in for deciding on which energy directing element (if more than two are available) and when would be the correct timing for handover so as the duration of the energy directing elements.
- **Number of targets.** At any point of time the number of targets at the overlap field of regard as well as the exclusive fields of regards (the ones covered by only one energy directing element) are monitored.
- **Target metadata.** Apart from kinematic data (speed, position) obtained on the targets, it is also possible to have some metadata on the targets such as type of target and the risk associated with it as well as its resilience and how difficult it will be to address. Another metadata is priority that leads to scheduling the handovers.

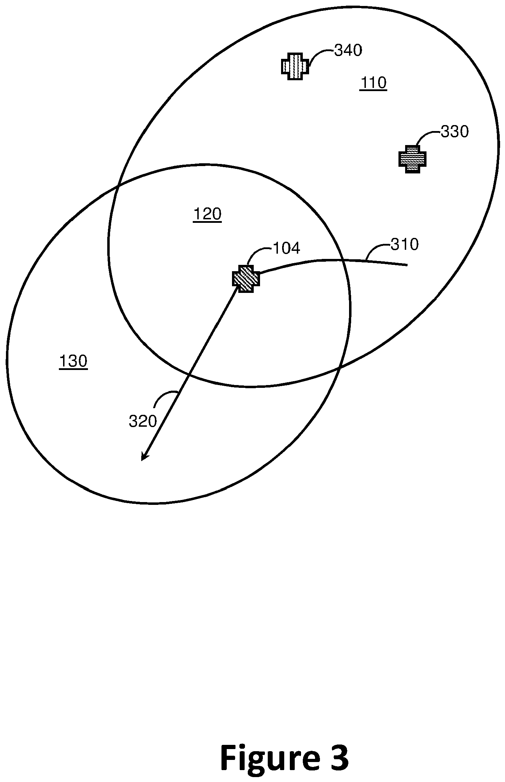

**Fig. 3** shows a diagram illustrating an aspect of the system according to some embodiments of the present invention. First field of regard **110,** second field of regard **130** and overlap area **120** are shown here with target **104** that is initially being handled by energy directing element **102A** (not shown here) associated with field of regard **110.** Target **104** is associated with a past trajectory **310** which is part of the handover parameters known to the system as well as a predicted trajectory **320** of target **104** and similar information on other targets **330** and **340.**

According to some embodiments of the present invention, in a case of more than one target in the coverage area handled by an energy directing element, an early handover will occur so that the energy directing element having more than one target in its field of regard will be released to handle the targets that are not within the overlap area. Thus, in the example above, target **104** will undergo a handover from energy directing element **102A** (not shown) associated with field of regard **110** to energy directing element **102B** (not shown) associated with field of regard **130** as soon as additional targets **330** and **340** appear in the portion of field of regard **110** that is not covered by overlap area **120** so that energy directing element **102A** is released and can handle additional targets **330** and **340** while energy directing element **102B** handles target **104.**

According to some embodiments of the present invention, in a case of duration constrains on energy directing elements that are not the active energy directing element, delaying the handover to any energy directing element that has a duration constraint. Similarly- if the active energy directing element reaches or almost reaches the time period allocated to the mission, a handover to the other energy directing element(s) will occur.

According to some embodiments of the present invention, it is sometimes advantageous to have a handshake period during so that the two or more energy directing elements remain operational simultaneously (i.e., both of them are directing the energy towards the same object for a specified duration of time. By having a handshake period, a more reliable handover may be achieved as the outcome of the two or more energy directing elements can be monitored and verified.

According to some embodiments of the present invention it is sometimes advantageous to have two or more of the energy directing elements directed at the same object or target simultaneously, beyond the aforementioned handshake period. This is of course only possible within the overlapping area and so the aforementioned handover criteria, rules, and parameters discussed herein in this application may be applied, *mutatis mutandis,* for such a use case. Specifically, the handover in a case of two or more energy directing elements can control the time point and manner in which one of the two energy directing elements shall leave or join the one or two other energy directing elements that are assigned together on the same object or target.

In some embodiments, the mode of operation of the two or more energy directing elements operating on the same object or target may be different, for achieving optimal outcome.

This is achieved by coordinating or synchronizing their operation or operational parameters (e.g. polarization, pulses, modulation, and the like).

Therefore, when applying the handover for adding or removing an energy directing element to collaborative or simultaneous operation at a same object, it may be further required to reconfigure the mode of operation of the remaining or additional energy directing elements in order to achieve the aforementioned coordination.

In some embodiments, in a case of more than one target in the coverage area handled by an energy directing element, the handover may be delayed to any energy directing elements that already handles a target.

In some embodiments, in a case that a new target appears in the field of regard of the active energy directing element, an early handover can be carried out so as to release the active energy directing elements to handle the new target.

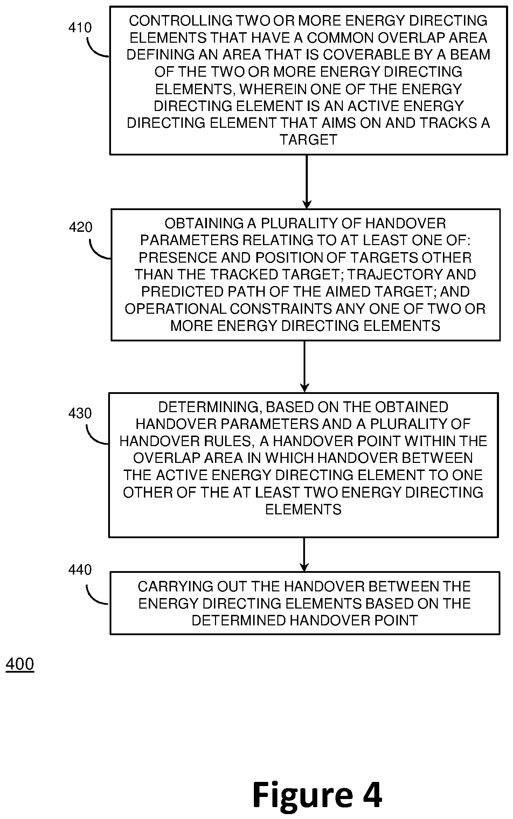

**Fig. 4** is a flowchart diagram illustrating the steps of a method of determining a handover between at least two energy directing elements in accordance with some embodiments of the present invention. Method **400** may include: controlling two or more energy directing elements that have a common overlap area defining an area that is coverable by a beam of said two or more energy directing elements, wherein one of the energy directing elements is an active energy directing element that aims on and tracks a target **410;** obtaining a plurality of handover parameters relating to at least one of: presence and position of targets other than the tracked target; trajectory and predicted path of the aimed target and the other targets; the targets handling priority (e.g. when the target is a missile that threatens the platform, a priority will be time to hit the platform) and operational constraints any one of two or more energy directing elements **420;** determining, based on the obtained handover parameters and a plurality of handover rules, a handover point or time within the overlap area in which handover between the active energy directing element to one other of said at least two energy directing elements **430;** and carrying out the handover between the energy directing elements based on the determined handover point **440.**

In order to implement method **400** according to some embodiments of the present invention, and specifically the implementation of handover rules **270** a computer processor may receive instructions and data from a read-only memory or a random access memory or both. At least one of aforementioned steps of method **400** and some of rules **270** may be applied and/or performed by at least one processor associated with a computer. The essential elements of a computer are a processor for executing instructions and one or more memories for storing instructions and data. Generally, a computer will also include, or be operatively coupled to communicate with, one or more mass storage devices for storing data files.

Storage modules suitable for tangibly embodying computer program instructions and data include all forms of non-volatile memory, including by way of example semiconductor memory devices, such as EPROM, EEPROM, and flash memory based solid state disks (SSDs) and also magneto-optic storage devices.

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in base band or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wire-line, optical fiber cable, RF, etc., or any suitable combination of the foregoing. Computer program code for carrying out operations for aspects of the present invention may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described above with reference to flowchart illustrations and/or portion diagrams of methods, apparatus (systems) and computer program products according to embodiments of the invention. It will be understood that each portion of the flowchart illustrations and/or portion diagrams, and combinations of portions in the flowchart illustrations and/or portion diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or portion diagram portion or portions.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or portion diagram portion or portions.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or portion diagram portion or portions.

The aforementioned flowchart and diagrams illustrate the architecture, functionality, and operation of possible implementations of systems, methods and computer program products according to various embodiments of the present invention. In this regard, each portion in the flowchart or portion diagrams may represent a module, segment, or portion of code, which comprises one or more executable instructions for implementing the specified logical function(s). It should also be noted that, in some alternative implementations, the functions noted in the portion may occur out of the order noted in the figures. For example, two portions shown in succession may, in fact, be executed substantially concurrently, or the portions may sometimes be executed in the reverse order, depending upon the functionality involved. It will also be noted that each portion of the portion diagrams and/or flowchart illustration, and combinations of portions in the portion diagrams and/or flowchart illustration, can be implemented by special purpose hardware-based systems that perform the specified functions or acts, or combinations of special purpose hardware and computer instructions.

In the above description, an embodiment is an example or implementation of the inventions. The various appearances of "one embodiment," "an embodiment" or "some embodiments" do not necessarily all refer to the same embodiments.

Although various features of the invention may be described in the context of a single embodiment, the features may also be provided separately or in any suitable combination. Conversely, although the invention may be described herein in the context of separate embodiments for clarity, the invention may also be implemented in a single embodiment.

Reference in the specification to "some embodiments", "an embodiment", "one embodiment" or "other embodiments" means that a particular feature, structure, or characteristic described in connection with the embodiments is included in at least some embodiments, but not necessarily all embodiments, of the inventions.

It is to be understood that the details set forth herein do not construe a limitation to an application of the invention. Furthermore, it is to be understood that the invention can be carried out or practiced in various ways and that the invention can be implemented in embodiments other than the ones outlined in the description above.

It is to be understood that the terms "including", "comprising", "consisting" and grammatical variants thereof do not preclude the addition of one or more components, features, steps, or integers or groups thereof and that the terms are to be construed as specifying components, features, steps or integers. If the specification or claims refer to "an additional" element, that does not preclude there being more than one of the additional element. It is to be understood that where the claims or specification refer to "a" or "an" element, such reference is not be construed that there is only one of that element. It is to be understood that where the specification states that a component, feature, structure, or characteristic "may", "might", "can" or "could" be included, that particular component, feature, structure, or characteristic is not required to be included. Where applicable, although state diagrams, flow diagrams or both may be used to describe embodiments, the invention is not limited to those diagrams or to the corresponding descriptions. For example, flow need not move through each illustrated box or state, or in exactly the same order as illustrated and described. Methods of the present invention may be implemented by performing or completing manually, automatically, or a combination thereof, selected steps or tasks.

The term "method" may refer to manners, means, techniques and procedures for accomplishing a given task including, but not limited to, those manners, means, techniques and procedures either known to, or readily developed from known manners, means, techniques and procedures by practitioners of the art to which the invention belongs. The descriptions, examples, methods and materials presented in the claims and the specification are not to be construed as limiting but rather as illustrative only. Meanings of technical and scientific terms used herein are to be commonly understood as by one of ordinary skill in the art to which the invention belongs, unless otherwise defined.

## Claims

1. A system (100) for determining a handover between at least two energy directing elements (102A, 102B), the system comprising:
two or more energy directing elements (102A, 102B) that have a common overlap area (120) defining an area that is coverable by a direction of said two or more energy directing elements wherein one of the energy directing elements is an active energy directing element that aims on and tracks a target (104);
a handover decision module (250) configured to:
obtain a plurality of handover parameters (220) including the position, speed and pattern of movement of the target monitored over time, and therefrom learning and predicting the target's movement and trajectory (320);
determine, based on the obtained handover parameters and a plurality of handover rules (270) including a rule for reducing a number of unnecessary handovers, a handover point within the overlap area in which to handover between the active energy directing element to one other of said at least two energy directing elements; and
a controller configured to carry out the handover between the energy directing elements based on the determined handover point.

2. The system according to claim 1, wherein the two or more energy directing elements (102A, 102B) are beam directors and are part of a Direct Infra-Red Counter Measure (DIRCM) system.

3. The system according to claim 1, wherein at least two of the energy directing elements (102A, 102B) are operating simultaneously on the same target (104), and wherein the handover decision module is further configured to determine, based on the obtained handover parameters (220) and a plurality of handover rules (270), a handover time in which one of the at least two of the energy directing elements (102A, 102B) operating simultaneously, leaves the simultaneous operation.

4. The system according to claim 1, wherein at least two of the energy directing elements (102A, 102B) are operating simultaneously on the same target (104), and wherein the handover decision module is further configured to determine, based on the obtained handover parameters (220) and a plurality of handover rules (270), a handover time in which an additional energy directing element joins the at least two of the energy directing elements (102A, 102B) operating simultaneously.

5. The system according to claim 3 or 4, wherein the handover decision module (250) is further configured to assign, at the handover time, one of a plurality of operation modes to the remaining or joining energy directing elements.

6. The system according to any preceding claim, wherein the plurality of handover parameters further include at least one of: the presence and position of targets (330, 340) other than the tracked target (104); timing constraints, and operational constraints of any one of said at least two energy directing elements (102A, 102B).

7. A method (400) for determining a handover between at least two energy directing elements, the method comprising:
controlling two or more energy directing elements that have a common overlap area defining an area that is coverable by a beam of said two or more energy directing elements, wherein one of the energy directing elements is an active energy directing element that aims on and tracks a target (410);
obtaining a plurality of handover parameters including the position, speed and pattern of movement of the target monitored over time, and therefrom learning and predicting the target's movement and trajectory (420);
determining, based on the obtained handover parameters and a plurality of handover rules including a rule for reducing a number of unnecessary handovers, a handover point within the overlap area in which to handover between the active energy directing element to one other of said at least two energy directing elements (430); and
carrying out the handover between the energy directing elements based on the determined handover point (440).

8. The method according to claim 7, wherein in a case that a new target appears in a portion of the field of regard of the active energy directing element that is not covered by the common overlap area, carrying out a handover as soon as the new target appears so as to release the active energy directing elements to handle the new target.

9. The method according to claim 7, wherein in a case of duration constraints on energy directing elements that are not the active energy directing element, delaying the handover to any energy directing element that has a duration constraint.

10. The method according to claim 7, wherein the two or more energy directing elements are beam directors that are part of a Direct Infra-Red Counter Measure (DIRCM) system.

11. The method according to claim 7, wherein at least two of the energy directing elements are operating simultaneously on the same object, and wherein the method further comprises determining, based on the obtained handover parameters and a plurality of handover rules, a handover time point in which one of the at least two of the energy directing elements operating simultaneously, leaves the simultaneous operation.

12. The method according to claim 7, wherein at least two of the energy directing elements are operating simultaneously on the same object, and wherein the method further comprises determining, based on the obtained handover parameters and a plurality of handover rules, a handover time point in which an additional energy directing element joins the at least two of the energy directing elements operating simultaneously.

13. The method according to claim 11 or 12, further comprising assigning, at the handover time point, one of a plurality of operation modes to the remaining or joining energy directing elements.

14. The method according to any of claims 7-13, wherein the plurality of handover parameters further include at least one of: the presence and position of targets other than the tracked target; timing constraints, and operational constraints of any one of said at least two energy directing elements.

## Patentansprüche

1. System (100) zum Bestimmen einer Übergabe zwischen mindestens zwei Energie lenkenden Elementen (102A, 102B), wobei das System wie folgt umfasst:
zwei oder mehr Energie lenkende Elemente (l02A, 102B), die einen gemeinsamen Überlappungsbereich (120) haben, der einen Bereich definiert, der durch eine Lenkung der zwei oder mehr Energie lenkenden Elemente überdeckbar ist, wobei eines der Energie lenkenden Elemente ein aktives Energie lenkendes Element ist, das auf ein Ziel (104) zuhält und dieses verfolgt;
ein Übergabe-Entscheidungsmodul (250), das wie folgt dazu konfiguriert ist zum:
Erhalten einer Vielzahl von Übergabeparametern (220), einschließlich der Position, der Geschwindigkeit und dem Bewegungsmuster des Ziels, das im Zeitverlauf überwacht wird, sowie entsprechend Eruieren und Vorhersagen danach der Bewegung und Trajektorie (320) des Ziels;
Bestimmen aufgrund der erhaltenen Übergabeparameter und einer Vielzahl von Übergaberegeln (270), einschließlich einer Regel zum Reduzieren einer Anzahl unnötiger Übergaben, eines Übergabepunkts innerhalb des Überlappungsbereichs, an dem das Übergeben zwischen dem aktiven Energie lenkenden Element auf ein anderes der mindestens zwei Energie lenkenden Elemente erfolgt; und
einen Controller, der dazu konfiguriert ist, die Übergabe zwischen den Energie lenkenden Elementen basierend auf dem bestimmten Übergabepunkt vorzunehmen.

2. System nach Anspruch 1, wobei die zwei oder mehr Energie lenkenden Elemente (102A, 102B) Strahlenlenker und Teil eines Systems gelenkter Infrarot-Gegenmaßnahmen (*Direct Infra-Red Counter Measures,* DIRCM) sind.

3. System nach Anspruch 1, wobei mindestens zwei der Energie lenkenden Elemente (102A, 102B) gleichzeitig auf dasselbe Ziel (104) einwirken und wobei das Übergabe-Entscheidungsmodul ferner dazu konfiguriert ist, basierend auf den erhaltenen Übergabeparametern (220) und einer Vielzahl von Übergaberegeln (270) eine Übergabezeit zu bestimmen, zu der eines der mindestens zwei der Energie lenkenden Elemente (l02A, 102B), die gleichzeitig operieren, den Simultanbetrieb verlässt.

4. System nach Anspruch 1, wobei mindestens zwei der Energie lenkenden Elemente (102A, 102B) gleichzeitig auf dasselbe Ziel (104) hin betrieben werden und wobei das Übergabe-Entscheidungsmodul ferner dazu konfiguriert ist, basierend auf den erhaltenen Übergabeparametern (220) und einer Vielzahl von Übergaberegeln (270) eine Übergabezeit zu bestimmen, zu der ein zusätzliches Energie lenkendes Element zu den mindestens zwei Energie lenkenden Elementen (102A, 102B), die gleichzeitig operieren, hinzukommt.

5. System nach Anspruch 3 oder 4, wobei das Übergabe-Entscheidungsmodul (250) ferner dazu konfiguriert ist, zur Übergabezeit einen aus einer Vielzahl von Betriebsmodi den verbleibenden oder hinzukommenden Energie lenkenden Elementen zuzuweisen.

6. System nach einem der vorhergehenden Ansprüche, wobei die Vielzahl von Übergabeparametern ferner mindestens eines hiervon aufweist: die Präsenz und Position von Zielen (330, 340), die nicht das verfolgte Ziel (104) sind; Zeitvorgabe- und Betriebsrestriktionen von etwaigen der mindestens zwei Energie lenkenden Elemente (102A, 102B).

7. Verfahren (400) zum Bestimmen einer Übergabe zwischen mindestens zwei Energie lenkenden Elementen, wobei das Verfahren wie folgt umfasst:
Steuern von zwei oder mehr Energie lenkenden Elementen, die einen gemeinsamen Überlappungsbereich haben, der einen Bereich definiert, der durch einen Strahl der zwei oder mehr Energie lenkenden Elemente abdeckbar ist, wobei eines der Energie lenkenden Elemente ein aktives Energie lenkendes Element ist, das auf ein Ziel (410) zuhält und dieses verfolgt;
Erhalten einer Vielzahl von Übergabeparametern, einschließlich der Position, der Geschwindigkeit und des Bewegungsmusters des überwachten Ziels im Zeitverlauf sowie entsprechend Eruieren und Vorhersagen danach der Bewegung und Trajektorie (320) des Ziels;
Bestimmen aufgrund der erhaltenen Übergabeparameter und einer Vielzahl von Übergaberegeln, einschließlich einer Regel zum Reduzieren einer Anzahl unnötiger Übergaben, eines Übergabepunkts innerhalb des Überlappungsbereichs, an dem das Übergeben zwischen dem aktiven Energie lenkenden Element auf ein anderes der mindestens zwei Energie lenkenden Elemente erfolgt; und
Durchführen der Übergabe zwischen den Energie lenkenden Elementen basierend auf dem bestimmten Übergabepunkt (440).

8. Verfahren nach Anspruch 7, wobei gilt, falls ein neues Ziel in einem Anteil des Berücksichtigungs-Felds des aktiven Energie lenkenden Elements erscheint, das nicht von dem gemeinsamen Überlappungsbereich abgedeckt ist, Durchführen einer Übergabe sobald das neue Ziel erscheint, um die aktiven Energie lenkenden Elemente freizugeben, damit sie das neue Ziel bearbeiten.

9. Verfahren nach Anspruch 7, wobei gilt, falls die Energie lenkenden Elemente, die nicht das aktive Energie lenkende Element sind, Dauer-Restriktionen unterliegen, Verzögern der Übergabe an etwaige Energie lenkende Elemente, die Dauer-Restriktionen unterliegen.

10. Verfahren nach Anspruch 7, wobei die zwei oder mehr Energie lenkenden Elemente Strahlenlenker sind, die Teil eines Systems gelenkter Infrarot-Gegenmaßnahmen (DIRCM) sind.

11. Verfahren nach Anspruch 7, wobei die mindestens zwei Energie lenkenden Elemente gleichzeitig auf dasselbe Objekt einwirken und wobei das Verfahren basierend auf den erhaltenen Übergabeparametern und einer Vielzahl von Übergaberegeln ferner Bestimmen eines Übergabezeitpunktes umfasst, an dem eines der mindestens zwei die Energie lenkenden Elemente, die gleichzeitig operieren, den Simultanbetrieb verlässt.

12. Verfahren nach Anspruch 7, wobei mindestens zwei der Energie lenkenden Elemente gleichzeitig auf dasselbe Objekt einwirken und wobei das Verfahren basierend auf den erhaltenen Übergabeparametern und eine Vielzahl von Übergaberegeln ferner Bestimmen eines Übergabezeitpunktes umfasst, an dem ein zusätzliches Energie lenkendes Element den mindestens zwei Energie lenkenden Elementen, die gleichzeitig operieren, hinzugefügt wird.

13. Verfahren nach Anspruch 11 oder 12, ferner umfassend Zuweisen von einem einer Vielzahl von Betriebsmodi an die verbleibenden oder hinzukommenden Energie lenkenden Elemente am Übergabezeitpunkt.

14. Verfahren nach einem der Ansprüche 7-13, wobei die Vielzahl der Übergabeparameter ferner mindestens einen hiervon aufweist: die Präsenz und Position der Ziele, die nicht das verfolgte Ziel sind; Zeitvorgabe- und Betriebsrestriktionen eines etwaigen der mindestens zwei Energie lenkenden Elemente.

## Revendications

1. Système (100) pour déterminer un transfert entre au moins deux éléments directeurs d'énergie (102A, 102B), le système comprenant :
deux ou plusieurs éléments directeurs d'énergie (102A, 102B) qui ont une zone de chevauchement commune (120) définissant une zone qui peut être couverte par une direction desdits deux ou plusieurs éléments directeurs d'énergie, l'un des éléments directeurs d'énergie étant un élément directeur d'énergie active qui vise et suit une cible (104) ;
un module de décision de transfert (250) configuré pour :
obtenir une pluralité de paramètres de transfert (220), comprenant la position, la vitesse et le schéma de mouvement de la cible surveillée au fil du temps, et à partir de là, apprendre et prédire le mouvement et la trajectoire de la cible (320) ;
déterminer, en fonction des paramètres de transfert obtenus et d'une pluralité de règles de transfert (270) comprenant une règle permettant de réduire un nombre de transferts inutiles, un point de transfert à l'intérieur de la zone de chevauchement dans laquelle effectuer le transfert entre l'élément directeur d'énergie active vers l'un desdits au moins deux éléments directeurs d'énergie ; et
un contrôleur configuré pour effectuer le transfert entre les éléments directeurs d'énergie en fonction du point de transfert déterminé.

2. Système selon la revendication 1, dans lequel les deux ou plusieurs éléments directeurs d'énergie (102A, 102B) sont des directeurs de faisceaux et font partie d'un système de contre-mesure infrarouge directe (DIRCM).

3. Système selon la revendication 1, dans lequel au moins deux des éléments directeurs d'énergie (102A, 102B) fonctionnent simultanément sur la même cible (104), et dans lequel le module de décision de transfert est en outre configuré pour déterminer, en fonction des paramètres de transfert (220) obtenus et d'une pluralité de règles de transfert (270), un temps de transfert pendant lequel l'un des au moins deux éléments directeurs d'énergie (102A, 102B) fonctionnant simultanément quitte le fonctionnement simultané.

4. Système selon la revendication 1, dans lequel au moins deux des éléments directeurs d'énergie (102A, 102B) fonctionnent simultanément sur la même cible (104), et dans lequel le module de décision de transfert est en outre configuré pour déterminer, en fonction des paramètres de transfert (220) obtenus et d'une pluralité de règles de transfert (270), un temps de transfert pendant lequel un élément supplémentaire directeur d'énergie rejoint les au moins deux éléments directeurs d'énergie (102A, 102B) fonctionnant simultanément.

5. Système selon la revendication 3 ou 4, dans lequel le module de décision de transfert (250) est en outre configuré pour attribuer, au moment du transfert, l'un d'une pluralité de modes de fonctionnement aux éléments directeurs d'énergie restants ou se joignant.

6. Système selon l'une quelconque des revendications précédentes, dans lequel la pluralité de paramètres de transfert inclut en outre au moins l'un parmi :
la présence et la position de cibles (330, 340) autres que la cible suivie (104) ;
des contraintes de synchronisation et des contraintes opérationnelles de l'un quelconque desdits au moins deux éléments directeurs d'énergie (102A, 102B).

7. Procédé (400) pour déterminer un transfert entre au moins deux éléments directeurs d'énergie, le procédé consistant à :
contrôler deux ou plusieurs éléments directeurs d'énergie qui ont une zone de chevauchement commune définissant une zone qui peut être couverte par un faisceau desdits deux ou plusieurs éléments directeurs d'énergie, l'un des éléments directeurs d'énergie étant un élément directeur d'énergie active qui vise et suit une cible (410) ;
obtenir une pluralité de paramètres de transfert comprenant la position, la vitesse et le schéma de mouvement de la cible surveillée au fil du temps, et à partir de là, apprendre et prédire le mouvement et la trajectoire de la cible (420) ;
déterminer, en fonction des paramètres de transfert obtenus et d'une pluralité de règles de transfert comprenant une règle permettant de réduire un nombre de transferts inutiles, un point de transfert à l'intérieur de la zone de chevauchement dans laquelle effectuer le transfert entre l'élément directeur d'énergie active vers un autre desdits au moins deux éléments directeurs d'énergie (430) ; et
effectuer le transfert entre les éléments directeurs d'énergie en fonction du point de transfert déterminé (440).

8. Procédé selon la revendication 7, consistant à, au cas où une nouvelle cible apparaît dans une partie du champ de vision de l'élément directeur d'énergie active qui n'est pas couverte par la zone de chevauchement commune, effectuer un transfert dès que la nouvelle cible apparaît de manière à libérer les éléments directeurs d'énergie active pour gérer la nouvelle cible.

9. Procédé selon la revendication 7, consistant à, en cas de contraintes de durée concernant des éléments directeurs d'énergie qui ne sont pas les éléments directeurs d'énergie active, retarder le transfert vers tout élément directeur d'énergie qui a une contrainte de durée.

10. Procédé selon la revendication 7, dans lequel les deux ou plusieurs éléments directeurs d'énergie sont des directeurs de faisceaux qui font partie d'un système de contre-mesure infrarouge directe (DIRCM).

11. Procédé selon la revendication 7, dans lequel au moins deux des éléments directeurs d'énergie fonctionnent simultanément sur le même objet, le procédé consistant en outre à déterminer, en fonction des paramètres de transfert obtenus et d'une pluralité de règles de transfert, un point temporel de transfert auquel l'un des au moins deux éléments directeurs d'énergie fonctionnant simultanément quitte le fonctionnement simultané.

12. Procédé selon la revendication 7, dans lequel au moins deux des éléments directeurs d'énergie fonctionnent simultanément sur le même objet, le procédé consistant en outre à déterminer, en fonction des paramètres de transfert obtenus et d'une pluralité de règles de transfert, un point temporel de transfert auquel un élément supplémentaire directeur d'énergie rejoint les au moins deux éléments directeurs d'énergie fonctionnant simultanément.

13. Procédé selon la revendication 11 ou 12, consistant en outre à attribuer, au moment du transfert, un mode parmi une pluralité de modes de fonctionnement aux éléments directeurs d'énergie restants ou se joignant.

14. Procédé selon l'une quelconque des revendications 7 à 13, dans lequel la pluralité de paramètres de transfert inclut en outre au moins l'un parmi :
la présence et la position de cibles autres que la cible suivie ;
des contraintes de synchronisation et des contraintes opérationnelles de l'un quelconque desdits au moins deux éléments directeurs d'énergie.
